# EUROPEAN PATENT SPECIFICATION

(11) **EP 2 845 248 B1**
(45) Date of publication and mention of the grant of the patent: **24.08.2016**
(21) Application number: 13758977.6
(22) Date of filing: 16.07.2013
(51) Int. Cl.: H01M 2/30, H01M 2/34, H01M 10/0525

(54) **SEALED BATTERY**
ABGEDICHTETE BATTERIE
BATTERIE SCELLÉE

(30) Priority: 07.08.2012 JP 2012175187
(43) Date of publication of application: 11.03.2015
(73) Proprietor: Toyota Jidosha Kabushiki Kaisha, Toyota-shi, Aichi 471-8571 (JP)
(72) Inventor: KIYAMA, Akira, Toyota-shi Aichi-ken 471-8571 (JP); TAKADA, Toshihiro, Toyota-shi Aichi-ken 471-8571 (JP); INUKAI, Hiroshi, Toyota-shi Aichi-ken 471-8571 (JP); HARADA, Hironori, Toyota-shi Aichi-ken 471-8571 (JP); TSUCHIDA, Yasushi, Toyota-shi Aichi-ken 471-8571 (JP)
(74) Representative: Intès, Didier Gérard André
(86) International application number: PCT/IB2013/001550
(87) International publication number: WO 2014/024015

(56) References cited:
- EP-A2- 0 739 047
- US-A1- 2008 038 628

## Description

### BACKGROUND OF THE INVENTION

### 1. Field of the Invention

The invention relates to technology of a pressure type current interrupting mechanism of a sealed battery.

### 2. Description of Related Art

A sealed battery is a battery configured with an electrode body that includes a positive electrode and a negative electrode being sealed, together with an electrolyte, inside a battery case. A lithium-ion secondary battery is one well-known example of a sealed battery. Some sealed batteries are provided with a current interrupting mechanism that detects overcharge and interrupts current. One such known current interrupting mechanism is a pressure-type current interrupting mechanism that physically interrupts current when the internal pressure of the battery case becomes higher than a set pressure (for example, Japanese Patent Application Publication No. 2010-212034 (JP 2010-212034 A)).

Here, when disposing of a sealed battery in which a pressure type current interrupting mechanism has been activated, it is necessary to discharge or deactivate the sealed battery. However, originally, with a sealed battery, the positive and negative electrodes are insulated from one another, so the battery is unable to be discharged from an external terminal. Also, with a sealed battery, the battery is sealed, so a battery deactivation solution such as saline solution is unable to be poured in to deactivate the battery (i.e., the battery is unable to be deactivated).
US2008038628 (A1) discloses a sealed secondary battery with a pressure-sensitive elastic element operating at a desired operating pressure. The battery includes an outer can having an opening, an electrode assembly which is housed in the outer can and, a sealing plate sealing the opening, and an external electrode terminal.

Therefore, with a sealed battery, there is a need to be able to pour a battery deactivation solution into the battery case to eliminate an overcharged state after the pressure type current interrupting mechanism is activated.

### SUMMARY OF THE INVENTION

The invention refers to a sealed battery according to claim 1.

The invention thus provides a sealed battery in which a battery deactivation solution is able to be poured into the battery case to eliminate an overcharged state after the pressure type current interrupting mechanism is activated.

That is, a first aspect of the invention relates to a sealed battery that includes a battery case, an external terminal that includes a hollow portion that communicates an inside of the battery case with an outside of the battery case, a collector terminal that is arranged inside the battery case, a protruding member, and a pressure type current interrupting mechanism that is provided between the external terminal and the collector terminal. The pressure type current interrupting mechanism includes an inverted plate. The inverted plate is configured to seal off the inside of the battery case farther to the inside of the battery case than the collector terminal of the battery case. The pressure type current interrupting mechanism is configured to electrically disconnect the external terminal from the collector terminal by the inverted plate deforming according to an increase in pressure inside the battery case. The protruding member is arranged between the external terminal and the inverted plate. The protruding member protrudes toward the inverted plate. The protruding member has a through-hole that is communicated with a hollow portion of the external terminal. The hollow portion of the external terminal is configured to be communicated with the inside of the battery case farther to the inside of the battery case than the collector terminal of the battery case, via the through-hole of the protruding member, by the protruding member piercing the inverted plate when the pressure type current interrupting mechanism is activated.

In the sealed battery described above, the inverted plate may have a thin portion, and the protruding member may pierce the thin portion of the inverted plate when the pressure type current interrupting mechanism is activated.

According to the sealed battery of the invention, it is possible to pour a battery deactivation solution into the battery case to eliminate an overcharged state after the pressure type current interrupting mechanism is activated.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view showing a frame format of the structure of a lithium-ion secondary battery;
FIG. 2 is a sectional view showing a frame format of the structure of a positive terminal and a pressure type current interrupting mechanism;
FIG. 3A is a view showing a frame format of a state before the pressure type current interrupting mechanism is activated; and
FIG. 3B is a view showing a frame format of a state after the pressure type current interrupting mechanism is activated.

### DETAILED DESCRIPTION OF EMBODIMENTS

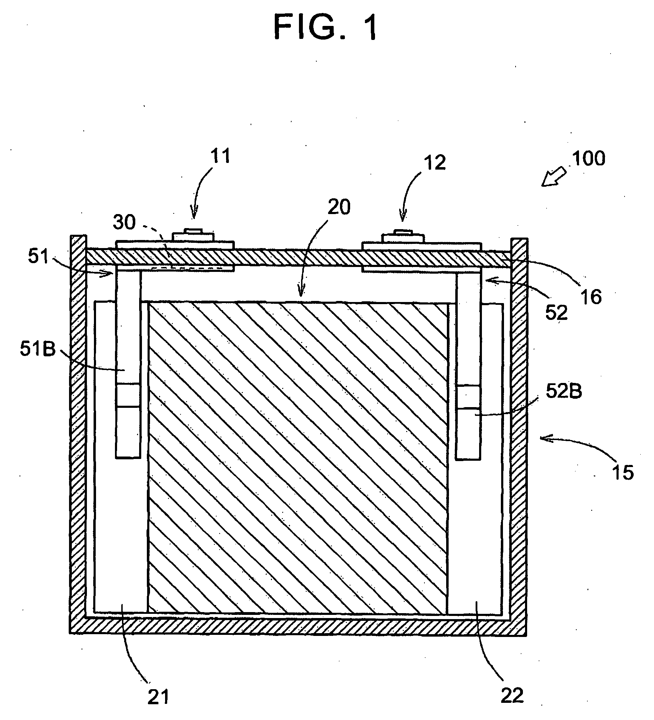

The structure of a lithium-ion secondary battery 100 will now be described with reference to FIG. 1. FIG 1 is a partial sectional view showing a frame format of the lithium-ion secondary battery 100 to facilitate understanding of the internal structure of the lithium-ion secondary battery 100.

The lithium-ion secondary battery 100 is one example embodiment of the sealed battery of the invention. The lithium-ion secondary battery 100 includes a battery case 15, a sealing plate 16, a positive terminal 11, and a negative terminal 12.

The battery case 15 is configured as a cuboid-shaped square case, the top surface of which is open. A flat rolled electrode body 20 and an electrolyte are housed inside the battery case 15. The sealing plate 16 closes off the opening of the battery case 15. The positive terminal 11 and the negative terminal 12 are provided on the sealing plate 16. A portion of both the positive terminal 11 and the negative terminal 12 protrudes on the surface side of the sealing plate 16.

A positive electrode collector terminal 51 and a negative electrode collector terminal 52 that serve as collector terminals and are connected to the positive terminal 11 and the negative terminal 12, respectively, stick into the battery case 15 when the opening thereof has been closed by the sealing plate 16.

The rolled electrode body 20 is formed by rolling a long positive electrode sheet and a long negative electrode sheet together via a long separator sheet, with a width direction as the axial direction. A positive electrode collector 21 is exposed on an end portion on one side of the rolled electrode body 20 in the axial direction, and a negative electrode collector 22 is exposed on an end portion on the other side of the rolled electrode body 20 in the axial direction.

A leg portion 51B extends downward on the positive electrode collector terminal 51. The positive electrode collector 21 is joined to this leg portion 51B. Similarly, a leg portion 52B extends downward on the negative electrode collector terminal 52. The negative electrode collector 22 is joined to this leg portion 52B.

A pressure type current interrupting mechanism 30 is interposed between the positive terminal 11 and the positive electrode collector terminal 51. That is, the positive terminal 11 is electrically connected to the positive electrode collector 21 of the rolled electrode body 20 via the pressure type current interrupting mechanism 30 and the positive electrode collector terminal 51. Also, the negative terminal 12 is electrically connected to the negative electrode collector 22 of the rolled electrode body 20 via the negative electrode collector terminal 52. The pressure type current interrupting mechanism 30 will be described in detail later.

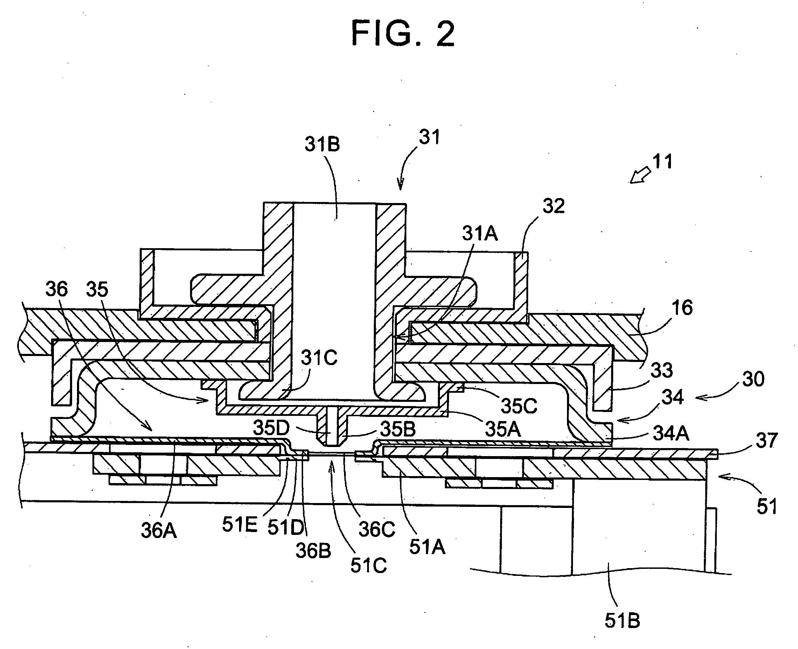

The structure of the pressure type current interrupting mechanism 30 provided between the positive terminal 11 and the positive electrode collector terminal 51 will be described with reference to FIG. 2. FIG. 2 is a partial sectional view showing a frame format of the positive terminal 11, the pressure type current interrupting mechanism 30, and the positive electrode collector terminal 51 to facilitate understanding of the description.

The positive terminal 11 includes a connection terminal 31 as an external terminal, a gasket 32, an insulating plate 33, a lead 34, and a protruding member 35.

The connection terminal 31 is formed in a hollow rivet shape, and includes a cylindrical portion 31A, a hollow portion 31B, and a tip end portion 31C. The connection terminal 31 integrally fixes the positive terminal 11, the gasket 32, the sealing plate 16, the insulating plate 33, and the lead 34 together by the cylindrical portion 31A being inserted into a hole formed in each of the gasket 32, the sealing plate 16, the insulating plate 33, and the lead 34, and the tip end portion 31C then being crimped. The connection terminal 31 is electrically connected to the lead 34 by the tip end portion 31C.

The gasket 32 is made of resin and is formed in a downwardly recessed shape. The gasket 32 is interposed between the connection terminal 31 and the sealing plate 16, and electrically insulates the connection terminal 31 from the sealing plate 16.

The insulating plate 33 is made of resin and is formed in an upwardly recessed shape. The insulating plate 33 is interposed between the sealing plate 16 and the lead 34, and electrically insulates the sealing plate 16 from the lead 34.

The lead 34 is made of aluminum and is formed in an upwardly recessed shape. A flat edge portion 34A that extends radially outward is formed on a lower end of a peripheral edge portion of the lead 34.

The protruding member 35 is made of aluminum and includes a main body 35A, a protruding portion 35B, a leg portion 35C, and a through-hole 35D. The protruding member 35 is arranged below the connection terminal 31.

The main body 35A is formed in a downwardly recessed shape. The protruding portion 35B is formed on a substantially center portion of the main body 35A and protrudes downward. The leg portion 35C is formed on an upper end of a peripheral edge portion of the main body 35A and extends radially outward. An upper surface of the leg portion 35C is joined by welding to a lower surface of a recessed portion of the lead 34. The through-hole 35D is a hole that is formed in the protruding portion 35B, and extends through the protruding portion 35B from an upper end to a lower end thereof, and is communicated with the hollow portion 31B of the connection terminal 31.

The positive electrode collector terminal 51 is made of aluminum and includes a main body 51A, a leg portion 51B, a hole portion 51C, a thin portion 51D, and an impressed portion 51E. The main body 51A is formed in a generally rectangular shape when viewed from above. The hole portion 51C that has a generally circular shape is formed in substantially a center portion of the main body 51A. The thin portion 51D that is formed thinner than the main body 51A is formed in a generally circular shape when viewed from above.

The impressed portion 51E is formed on the thin portion 51D. The impressed portion 51E is a generally circular groove that is formed on a lower surface of the thin portion 51D.

The pressure type current interrupting mechanism 30 includes an inverted plate 36, an insulating body 37, and the thin portion 51D of the positive electrode collector terminal 51. The pressure type current interrupting mechanism 30 electrically disconnects the positive terminal 11 from the positive electrode collector terminal 51 inside the battery case 15, by the inverted plate 36 deforming upward according to an increase in pressure inside the battery case 15.

The inverted plate 36 is made of aluminum and is formed in a generally discoid shape. The inverted plate 36 includes a main body 36A, a recessed portion 36B, and a thin portion 36C. The inverted plate 36 is a member that deforms in such a way as to bend in the pressure direction (i.e., upward) when the internal pressure of the battery case 15 becomes equal to or greater than a set pressure.

A peripheral edge portion of the main body 36A is joined by welding to the edge portion 34A of the lead 34, such that the main body 36A and the lead 34 are electrically connected. As a result, the connection terminal 31 and the inverted plate 36 are electrically connected via the lead 34. Also, the inverted plate 36 is interposed between the lead 34 and the insulating body 37.

The recessed portion 36B is formed on a substantially center portion of the main body 36A, with an upper surface side of the recessed portion 36B having a downwardly recessed shape. The thin portion 36C is formed in a circular shape on a substantially center portion of the recessed portion 36B. The thickness of the thin portion 36C is sufficiently less than the thickness of the main body 36A and the recessed portion 36B.

A bottom surface of the recessed portion 36B that is positioned on an outer peripheral side of the thin portion 36C is joined by welding to an upper surface of a portion of the thin portion 51D that is farther to the inside than the impressed portion 51E. As a result, the hole portion 51C of the positive electrode collector terminal 51 is sealed by the inverted plate 36, and the inside of the battery case 15 that is farther to the inside of the battery case 15 than the positive electrode collector terminal 51 of the battery case 15 is sealed off from the outside.

On the other hand, when the inverted plate 36 deforms upward from an increase in pressure inside the battery case 15, the thin portion 51D of the positive electrode collector terminal 51 is pulled upward by this deformation, such that the thin portion 51D fractures at the impressed portion 51E.

The thin portion 36C of the inverted plate 36 is formed substantially the same size as the hole portion 51C of the positive electrode collector terminal 51. The thin portion 36C of the inverted plate 36 is also formed in substantially the same position as (i.e., a position corresponding to) the hole portion 51C of the positive electrode collector terminal 51. The thin portion 36C of the inverted plate 36 is arranged below the protruding portion 35B of the protruding member 35. That is, the protruding portion 35B protrudes toward the thin portion 36C of the inverted plate 36.

The insulating body 37 is made of resin and is formed in a generally discoid shape. The insulating body 37 is interposed between the inverted plate 36 and the positive electrode collector terminal 51, and insulates the inverted plate 36 from the positive electrode collector terminal 51. More specifically, the insulating body 37 insulates a position excluding a welding portion where the recessed portion 36B of the inverted plate 36 is welded to the thin portion 51D of the positive electrode collector terminal 51.

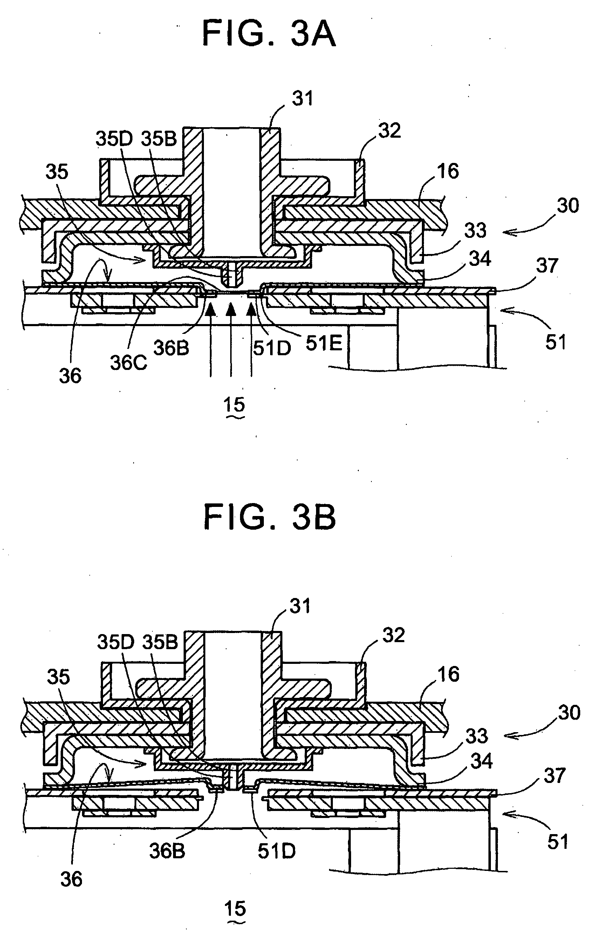

Next, the operation of the pressure type current interrupting mechanism 30 will be described with reference to FIGS. 3A and 3B. FIGS. 3A and 3B are partial sectional views showing frame formats of the pressure type current interrupting mechanism 30 to facilitate understanding of the description. Also, FIG. 3A is a view showing a state before the pressure type current interrupting mechanism 30 is activated, and FIG. 3B is a view of a state after the pressure type current interrupting mechanism is activated.

As shown in FIG. 3A, a case in which the lithium-ion secondary battery 100 is overcharged will be assumed. When the lithium-ion secondary battery 100 is overcharged, the components in the electrolyte consequently break down and the internal pressure of the battery case 15 increases. This increase in the internal pressure of the battery case 15 causes upward pressure to be applied to the pressure type current interrupting mechanism 30.

The upward pressure that is applied to the pressure type current interrupting mechanism 30 in turn causes upward pressure to also be applied to the inverted plate 36 (i.e., in the direction of the arrows in FIG. 3A), such that the inverted plate 36 deforms in such a way as to bend upward. As a result of the inverted plate 36 deforming in such a way as to bend upward, the thin portion 51D of the positive electrode collector terminal 51 is pulled upward. When the thin portion 51D of the positive electrode collector end 51 is pulled upward, a fracture consequently occurs at the impressed portion 51E of the positive electrode collector terminal 51.

As shown in FIG. 3B, upward pressure is applied to the pressure type current interrupting mechanism 30, such that force that pulls the thin portion 51D upward is applied. As a result, the positive electrode collector terminal 51 separates to the inside and the outside with the impressed portion 51E as the boundary, such that the electrical connection between the inverted plate 36 and the positive electrode collector terminal 51 is interrupted. When the electrical connection between the inverted plate 36 and the positive electrode collector terminal 51 is interrupted, the positive terminal 11 side of the pressure type current interrupting mechanism 30 consequently becomes electrically insulated from the positive electrode collector terminal 51 side of the pressure type current interrupting mechanism 30.

Here, the thin portion 36C of the inverted plate 36 is positioned below the protruding portion 35B of the protruding member 35. Also, when the inverted plate 36 deforms in such a way as to bend upward, the thin portion 36C becomes positioned higher than the lower end of the protruding portion 35B. Therefore, when the inverted plate 36 deforms in such a way as to bend upward, the thin portion 36C of the inverted plate 36 is consequently pierced by the protruding portion 35B of the protruding member 35. The protruding portion 35B of the protruding member 35 penetrates the inverted plate 36 by the thin portion 36C of the inverted plate 36 being pierced by the protruding portion 35B of the protruding member 35 in this way.

Also, the through-hole 35D is communicated with the hollow portion 31B of the connection terminal 31. Therefore, when the protruding portion 35B of the protruding member 35 penetrates the inverted plate 36, the inside of the battery case 15 farther to the inside of the battery case 15 than the positive electrode collector terminal 51 of the battery case 15 (i.e., below the inverted plate 36) consequently becomes communicated with the outside through the through-hole 35D of the protruding member 35 and the hollow portion 31B of the connection terminal 31. That is, after the pressure type current interrupting mechanism 30 is activated, the inside of the battery case 15 is communicated with the outside of the battery case 15 by the protruding member 35.

Next, the effects of the lithium-ion secondary battery 100 will be described. The lithium-ion secondary battery 100 enables a battery deactivation solution to be poured into the battery case to eliminate an overcharged state after the pressure type current interrupting mechanism is activated.

That is, after the pressure type current interrupting mechanism 30 is activated, the protruding portion 35B of the protruding member 35 penetrates the inverted plate 36, such that the inside of the battery case 15 (i.e., below the inverted plate 36) is communicated with the outside through the through-hole 35D of the protruding member 35, and the hollow portion 31B of the connection terminal 31, thereby enabling a battery deactivation solution to be poured into the battery case 15. Pouring a battery deactivation solution into the battery case 15 deactivates the lithium-ion secondary battery 100, thereby enabling the overcharged state to be eliminated.

With the lithium-ion secondary battery 100 in this example embodiment, the pressure type current interrupting mechanism 30 is provided on the positive terminal 11, but the invention is not limited to this. For example, the pressure type current interrupting mechanism 30 may also be provided on the negative terminal 12.

## Claims

1. A sealed battery (100) comprising:
a battery case (15);
an external terminal (31) including a hollow portion (31B) that communicates an inside of the battery case (15) with an outside of the battery case (15);
a collector terminal (51) arranged inside the battery case (15); and
a pressure type current interrupting mechanism (30) provided between the external terminal (31) and the collector terminal (51), the pressure type current interrupting mechanism (30) including an inverted plate (36), the inverted plate (36) being configured to seal off the inside of the battery case (15) further inside the battery case (15) than the collector terminal (51) of the battery case (15), and the pressure type current interrupting mechanism (30) being configured to electrically disconnect the external terminal (31) from the collector terminal (51) by the inverted plate (36) deforming according to an increase in pressure inside the battery case (15),
**characterized by** further comprising:
a protruding member (35) being arranged between the external terminal (31) and the inverted plate (36), the protruding member (35) protrudes toward the inverted plate (36), the protruding member (35) has a through-hole (35D) that is communicated with the hollow portion (31B) of the external terminal (31), and the hollow portion (31B) of the external terminal (31) is configured to be communicated with the inside of the battery case (15) further inside the battery case (15) than the collector terminal (51) of the battery case (15), via the through-hole (35D) of the protruding member (35), by the protruding member (35) piercing the inverted plate (36) when the pressure type current interrupting mechanism (30) is activated.

2. The sealed battery according to claim 1, wherein the inverted plate (36) has a thin portion (36C), and the protruding member (35) pierces the thin portion (36C) of the inverted plate (36) when the pressure type current interrupting mechanism (30) is activated.

3. The sealed battery according to claim 2, wherein the collector terminal (51) has a hole (51C); the thin portion (36C) of the inverted plate (36) is arranged in a position corresponding to the hole (51C) of the collector terminal (51); and the protruding member (35) is arranged in a position corresponding to the thin portion (36C) of the inverted plate (36).

4. The sealed battery according to any one of claims 1 to 3,
wherein the inverted plate (36) is jointed to the collector terminal (51) at a jointed portion,
the inverted plate (36) has a thin portion (36c) positioned on an inner peripheral side of the jointed portion, wherein the thickness of the thin portion (36C) is less than the thickness of the inverted plate (36) at the jointed portion, and
the collector terminal (51) has a hole (51C) positioned on an inner peripheral side of the jointed portion.

5. The sealed battery according claim 4,
wherein the inverted plate (36) has a recessed portion (36B), and
the collector terminal (51) has a thin portion (51D) with an impressed portion (51E) formed on it,
wherein a bottom surface of the recessed portion (36B) is joined to an upper surface of a portion of the thin portion (51D) that is on the peripheral inner side of the impressed portion (51E).

## Patentansprüche

1. Abgedichtete Batterie (100), umfassend:
ein Batteriegehäuse (15),
einen externen Anschluss (31), umfassend einen hohlen Abschnitt (31 B), der ein Inneres des Batteriegehäuses (15) mit einem Äußeren des Batteriegehäuses (15) kommunizierend verbindet,
einen Kollektoranschluss (51), der innerhalb des Batteriegehäuses (15) angeordnet ist, und
einen Stromunterbrechungsmechanismus (30) vom Drucktyp, der zwischen dem externen Anschluss (31) und dem Kollektoranschluss (51) vorgesehen ist, wobei der Stromunterbrechungsmechanismus (30) vom Drucktyp eine invertierte Platte (36) umfasst, wobei die invertierte Platte (36) dazu ausgebildet ist, das Innere des Batteriegehäuses (15) weiter innerhalb des Batteriegehäuses (15) als der Kollektoranschluss (51) des Batteriegehäuses (15) abzudichten, und wobei der Stromunterbrechungsmechanismus (30) vom Drucktyp dazu ausgebildet ist, den externen Anschluss (31) von dem Kollektoranschluss (51) dadurch elektrisch zu trennen, dass sich die invertierte Platte (36) entsprechend einer Erhöhung des Drucks innerhalb des Batteriegehäuses (15) verformt,
**dadurch gekennzeichnet, dass** sie ferner umfasst:
ein vorstehendes Glied (35), welches zwischen dem externen Anschluss (31) und der invertierten Platte (36) angeordnet ist, wobei das vorstehende Glied (35) in Richtung der invertierten Platte (36) vorsteht, wobei das vorstehende Glied (35) ein Durchgangsloch (35D) aufweist, das mit dem hohlen Abschnitt (31 B) des externen Anschlusses (31) kommunizierend verbunden ist, und wobei der hohle Abschnitt (31 B) des äußeren Anschlusses (31) dazu ausgebildet ist, über das Durchgangsloch (35D) des vorstehenden Glieds (35) mit dem Inneren des Batteriegehäuses (15) weiter innerhalb des Batteriegehäuses (15) als der Kollektoranschluss (51) des Batteriegehäuses (15) kommunizierend verbunden zu werden, indem das vorstehende Glied (35) die invertierte Platte (36) durchstößt, wenn der Stromunterbrechungsmechanismus (30) vom Drucktyp aktiviert wird.

2. Abgedichtete Batterie nach Anspruch 1, wobei die invertierte Platte (36) einen dünnen Abschnitt (36C) aufweist und das vorstehende Glied (35) den dünnen Abschnitt (36C) der invertierten Platte (36) durchstößt, wenn der Stromunterbrechungsmechanismus (30) vom Drucktyp aktiviert wird.

3. Abgedichtete Batterie nach Anspruch 2, wobei der Kollektoranschluss (51) ein Loch (51 C) aufweist, der dünne Abschnitt (36C) der invertierten Platte (36) in einer Position angeordnet ist, die dem Loch (51 C) des Kollektoranschlusses (51) entspricht, und das vorstehende Glied (35) in einer Position angeordnet ist, die dem dünnen Abschnitt (36C) der invertierten Platte (36) entspricht.

4. Abgedichtete Batterie nach einem beliebigen der Ansprüche 1 bis 3,
wobei die invertierte Platte (36) an einem Fügeabschnitt mit dem Kollektoranschluss (51) zusammengefügt ist,
die invertierte Platte (36) einen dünnen Abschnitt (36C) aufweist, der an einer Innenumfangsseite des Fügeabschnitts angeordnet ist, wobei die Dicke des dünnen Abschnitts (36C) kleiner als die Dicke der invertierten Platte (36) an dem Fügeabschnitt ist, und
der Kollektoranschluss (51) ein Loch (51 C) aufweist, das an einer Innenumfangsseite des Fügeabschnitts angeordnet ist.

5. Abgedichtete Batterie nach Anspruch 4,
wobei die invertierte Platte (36) einen vertieften Abschnitt (36B) aufweist und
der Kollektoranschluss (51) einen dünnen Abschnitt (51 D) mit einem daran geformten eingedrückten Abschnitt (51 E) aufweist,
wobei eine untere Oberfläche des vertieften Abschnitts (36B) mit einer oberen Oberfläche eines Abschnitts des dünnen Abschnitts (51 D), der auf der Innenumfangsseite des eingedrückten Abschnitts (51 E) ist, verbunden ist.

## Revendications

1. Batterie scellée (100) comprenant :
un corps de batterie (15) ;
une borne externe (31) comprenant une partie creuse (31B) qui fait communiquer un intérieur du corps de batterie (15) avec un extérieur du corps de batterie (15) ;
une borne de collecteur (51) disposée à l'intérieur du corps de batterie (15) ; et
un mécanisme d'interruption de courant du type à pression (30) prévu entre la borne externe (31) et la borne de collecteur (51), le mécanisme d'interruption de courant du type à pression (30) comprenant une plaque inversée (36), la plaque inversée (36) étant configurée pour sceller l'intérieur du corps de batterie (15) davantage à l'intérieur du corps de batterie (15) que la borne de collecteur (51) du corps de batterie (15), et le mécanisme d'interruption de courant du type à pression (30) étant configuré pour déconnecter électriquement la borne externe (31) de la borne de collecteur (51) grâce à la plaque inversée (36) qui se déforme en fonction d'une augmentation de pression à l'intérieur du corps de batterie (15),
**caractérisée en ce qu'**elle comporte en outre :
un élément saillant (35) qui est disposé entre la borne externe (31) et la plaque inversée (36), l'élément saillant (35) dépasse vers la plaque inversée (36), l'élément saillant (35) a un trou débouchant (35D) qui est en communication avec la partie creuse (31B) de la borne externe (31), et la partie creuse (31B) de la borne externe (31) est configurée pour être en communication avec l'intérieur du corps de batterie (15) davantage à l'intérieur du corps de batterie (15) que la borne de collecteur (51) du corps de batterie (15), par l'intermédiaire du trou débouchant (35D) de l'élément saillant (35), grâce à l'élément saillant (35) qui perce la plaque inversée (36) quand le mécanisme d'interruption de courant du type à pression (30) est activé.

2. Batterie scellée selon la revendication 1, dans laquelle la plaque inversée (36) a une partie mince (36C), et l'élément saillant (35) perce la partie mince (36C) de la plaque inversée (36) quand le mécanisme d'interruption de courant du type à pression (30) est activé.

3. Batterie scellée selon la revendication 2, dans laquelle la borne de collecteur (51) a un trou (51C) ; la partie mince (36C) de la plaque inversée (36) est disposée dans une position correspondant au trou (51C) de la borne de collecteur (51) ; et l'élément saillant (35) est disposé dans une position correspondant à la partie mince (36C) de la plaque inversée (36).

4. Batterie scellée selon l'une quelconque des revendications 1 à 3,
dans laquelle la plaque inversée (36) est reliée à la borne de collecteur (51) au niveau d'une partie de jonction,
la plaque inversée (36) a une partie mince (36c) positionnée sur un côté périphérique intérieur de la partie de jonction, l'épaisseur de la partie mince (36C) étant inférieure à l'épaisseur de la plaque inversée (36) au niveau de la partie de jonction, et
la borne de collecteur (51) a un trou (51C) positionné sur un côté périphérique intérieur de la partie de jonction.

5. Batterie scellée selon la revendication 4,
dans laquelle la plaque inversée (36) a une partie renfoncée (36B), et
la borne de collecteur (51) a une partie mince (51D) avec une partie empreinte (51E) formée dessus,
dans laquelle une surface inférieure de la partie renfoncée (36B) est reliée à une surface supérieure d'une partie de la partie mince (51D) qui est sur le côté périphérique intérieur de la partie empreinte (51E).
